# EUROPEAN PATENT APPLICATION

(11) **EP 4 223 701 A1**
(43) Date of publication of application: **09.08.2023**
(21) Application number: 21875494.3
(22) Date of filing: 27.09.2021
(51) Int. Cl.: C01G 53/00, H01M 4/36, H01M 4/505, H01M 4/525

(54) **PRODUCTION METHOD FOR LITHIUM ION SECONDARY BATTERY POSITIVE ELECTRODE ACTIVE MATERIAL, LITHIUM ION SECONDARY BATTERY POSITIVE ELECTRODE ACTIVE MATERIAL, AND LITHIUM ION SECONDARY BATTERY**

(30) Priority: 02.10.2020 JP 2020167454
(71) Applicant: SUMITOMO METAL MINING CO., LTD., Tokyo 105-8716 (JP); NATIONAL UNIVERSITY CORPORATION YOKOHAMA NATIONAL UNIVERSITY, Yokohama-shi Kanagawa 240-8501 (JP)
(72) Inventor: AIDA, Taira, Niihama-shi, Ehime 792-0002 (JP); YABUUCHI, Naoaki, Yokohama-shi, Kanagawa 240-8501 (JP)
(74) Representative: Müller-Boré & Partner Patentanwälte PartG mbB
(86) International application number: PCT/JP2021/035283
(87) International publication number: WO 2022/071192

(57) **Abstract**

An object of the present invention is to achieve a high capacity and suppress a decrease in capacity when charging and discharging repeatedly, which is a drawback of LNO, by suppressing a structural change associated with charge and discharge.

The present invention is characterized by comprising: a mixing process of mixing a lithium-transition metal composite oxide with lithium phosphate; a milling process of applying a mechanical stress to a mixture obtained in the mixing process to form the lithium-transition metal composite oxide having a crystal structure of a layered structure and the lithium phosphate into an amorphous or low-crystalline NiO-like rock-salt type crystal structure; and a heat treatment process of subjecting the mixture obtained in the milling process to a heat treatment to obtain a lithium-transition metal composite oxide having a layered rock-salt type crystal structure in which lithium phosphate is finely crystallized and dispersed, wherein the lithium-transition metal composite oxide is represented by a general formula: LiₛNi_{1-x-y-z}CoₓMn_{y}M_{z}O_{2+α}, and the finely crystallized lithium phosphate covers a surface of a primary particle of the lithium-transition metal composite oxide having the layered rock-salt type crystal structure, and is dispersed inside or on a surface of a secondary particle of the lithium-transition metal composite oxide having the layered rock-salt type crystal structure.

## Description

### Background of the Invention

### Field of the Invention

The present invention relates to a process for manufacturing a positive electrode active material for a lithium ion secondary battery including secondary particles in which a plurality of primary particles are aggregated with each other, a positive electrode active material for a lithium ion secondary battery, and a lithium ion secondary battery using the positive electrode active material for a lithium ion secondary battery as a positive electrode material. This application is based upon and claims the benefit of priority of the prior Japanese Patent Application No. 2020-167454 filed on October 2, 2020 in Japan, the entire contents of which are incorporated herein by reference.

### Description of Related Art

In recent years, in order to expand a cruising distance of an electric vehicle (EV), a secondary battery having a high energy density has been strongly desired. Examples of such a secondary battery include a lithium ion secondary battery (LIB) using lithium, a lithium alloy, a metal oxide, or carbon as a negative electrode.

The material exhibiting the highest capacity among positive electrode active materials used for a positive electrode of LIB for EV is LiNi_{1-x-y}CoₓAl_{y}O₂ (hereinafter, NCA). NCA is a positive electrode active material in which a part of Ni of lithium nickelate: LiNiO₂ (hereinafter, LNO) is substituted with Co and Al, and a crystal structural change when charging and discharging is suppressed by substitution with Co, and a thermal stability is improved by substitution with Al.

For example, in Patent Literature 1, a particulate positive electrode active material made of lithium cobalt oxide (LiCoO₂) is proposed, and large current supply is enabled.

Further, in Patent Literature 2, positive electrode particles made of LiNiₓCo_{y}M_{z}O₂ (where M is Al or Mn, 0 < x < 1, 0 < y < 1, x + y + z = 1) are proposed, and a discharge capacity of a lithium ion secondary battery is improved.

Patent Literature 1: JP 2020-136093 A
Patent Literature 2: JP 2016-110714 A

### Summary of the Invention

However, the positive electrode active materials as in Patent Literatures 1 and 2 exhibit a high capacity, but there is a problem in which a decrease in capacity associated with repeated charge and discharge is large due to a large structural change.

Therefore, in view of the above-described problem, an object of the present invention is to achieve a high capacity and suppress a decrease in capacity when charging and discharging repeatedly, which is a drawback of LNO, by suppressing a structural change associated with charge and discharge.

A process for manufacturing a positive electrode active material for a lithium ion secondary battery according to an aspect of the present invention is a process for manufacturing a positive electrode active material for a lithium ion secondary battery including secondary particles in which a plurality of primary particles are aggregated with each other, the process comprising: a mixing process of mixing a lithium-transition metal composite oxide having a crystal structure of a layered structure with lithium phosphate; a milling process of applying a mechanical stress to a mixture obtained in the mixing process to form the lithium-transition metal composite oxide having the crystal structure of the layered structure and the lithium phosphate into an amorphous or low-crystalline NiO-like rock-salt type crystal structure; and a heat treatment process of subjecting the mixture having the amorphous or low-crystalline NiO-like rock-salt type crystal structure obtained in the milling process to a heat treatment to obtain a lithium-transition metal composite oxide having a layered rock-salt type crystal structure in which lithium phosphate is finely crystallized and dispersed, wherein the lithium-transition metal composite oxide is represented by a general formula: LiₛNi_{1-x-y-z}CoₓMn_{y}M_{z}O_{2+α} (where 0 ≤ x ≤ 0.35, 0 ≤ y ≤ 0.35, 0 ≤ z ≤ 0.10, 1.00 ≤ s ≤ 1.30, 0 ≤ α ≤ 0.2, and M is at least one element selected from V, Mg, Mo, Nb, Ti, W, and Al), and the finely crystallized lithium phosphate covers a surface of a primary particle of the lithium-transition metal composite oxide having the layered rock-salt type crystal structure, and is dispersed inside or on a surface of a secondary particle of the lithium-transition metal composite oxide having the layered rock-salt type crystal structure.

In this way, it is possible to achieve a high capacity and suppress a decrease in capacity when charging and discharging repeatedly, which is a drawback of LNO.

At this time, in the mixing process, the lithium phosphate may be mixed with the lithium-transition metal composite oxide so as to be more than 0 and 10 wt% or less.

In this way, a proportion of the lithium-transition metal composite oxide and the lithium phosphate is optimized, and it is possible to achieve a high capacity and further suppress a decrease in capacity when charging and discharging repeatedly.

At this time, in the heat treatment process, a heat treatment may be performed at a temperature of 600 to 700°C.

In this way, it is further possible that the finely crystallized lithium phosphate covers a surface of a primary particle of the lithium-transition metal composite oxide having a layered rock-salt type crystal structure, and is dispersed inside or on a surface of a secondary particle of the lithium-transition metal composite oxide having a layered rock-salt type crystal structure, so that it is possible to achieve a high capacity and suppress a decrease in capacity when charging and discharging repeatedly.

At this time, in the milling process, a mechanical stress may be applied by mechanical milling.

In this way, it is further possible to form the lithium-transition metal composite oxide having a crystal structure of a layered structure and the lithium phosphate into an amorphous or low-crystalline NiO-like rock-salt type crystal structure, so that it is possible to achieve a high capacity and suppress a decrease in capacity when charging and discharging repeatedly.

At this time, in another aspect of the present invention, a positive electrode active material for a lithium ion secondary battery including secondary particles in which a plurality of primary particles are aggregated with each other, the positive electrode active material for a lithium ion secondary battery containing: a lithium-transition metal composite oxide having a layered rock-salt type crystal structure; and finely crystallized lithium phosphate, the positive electrode active material for a lithium ion secondary battery being represented by a general formula: kLi₃PO₄-(1-k)LiₛNi_{1-x-y-z}CoₓMn_{y}M_{z}O_{2+α} (where 0 < k < 0.1, 0 ≤ x ≤ 0.35, 0 ≤ y ≤ 0.35, 0 ≤ z ≤ 0.10, 1.00 ≤ s ≤ 1.30, 0 ≤ α ≤ 0.2, and M is at least one element selected from V, Mg, Mo, Nb, Ti, W, and Al), wherein the finely crystallized lithium phosphate covers a surface of a primary particle of the lithium-transition metal composite oxide having the layered rock-salt type crystal structure, and is dispersed inside or on a surface of a secondary particle of the lithium-transition metal composite oxide having the layered rock-salt type crystal structure.

In this way, it is possible to achieve a high capacity and suppress a decrease in capacity when charging and discharging repeatedly, which is a drawback of LNO.

At this time, in an aspect of the present invention, a lithium ion secondary battery includes at least a positive electrode containing the above positive electrode active material for a lithium ion secondary battery.

In this way, it is possible to obtain a lithium ion secondary battery capable of achieving a high capacity and suppressing a decrease in capacity when charging and discharging repeatedly, which is a drawback of LNO.

According to the present invention, it is possible to achieve a high capacity and suppress a decrease in capacity when charging and discharging repeatedly, which is a drawback of LNO, by suppressing a structural change associated with charge and discharge.

### Brief Description of the Drawings

Fig. 1 is a process diagram schematically illustrating a process for manufacturing a positive electrode active material for a lithium ion secondary battery according to an embodiment of the present invention.
Fig. 2(A) shows an SEM image of a positive electrode active material in Comparative Example 1, Fig. 2(B) shows an SEM image of a positive electrode active material in Example 1, and Fig. 2(C) shows an SEM image of a positive electrode active material in Example 2.
Fig. 3(A) shows mapping images of a positive electrode active material in Example 1, and Fig. 3(B) shows mapping images of a positive electrode active material in Example 2.
Fig. 4 is a diagram for confirming crystal structures of positive electrode active materials in Example 1, Example 2, and Comparative Example 1 using an XRD apparatus.
Fig. 5 is a diagram for confirming charge and discharge profiles when positive electrode active materials in Example 1, Example 2, and Comparative Example 1 were used.
Fig. 6 is a diagram for confirming charge and discharge profiles when positive electrode active materials in Example 1, Example 3, and Example 4 were used.

### Detailed Description of the Invention

In order to solve the above problem, the present inventors have extensively conducted studies on a positive electrode active material for a lithium ion secondary battery having excellent battery characteristics, and resultantly found that by mixing a powder composed of a lithium-transition metal composite oxide having a crystal structure of a layered structure with lithium phosphate, applying a mechanical stress to the mixture, and performing a heat treatment, finely crystallized lithium phosphate covers a surface of a primary particle of the lithium-transition metal composite oxide having a layered rock-salt type crystal structure, and is dispersed inside or on a surface of a secondary particle of the lithium-transition metal composite oxide having a layered rock-salt type crystal structure, so that it is possible to suppress a decrease in capacity when charging and discharging repeatedly, which is a drawback of LNO. Hereinafter, suitable embodiments of the present invention will be described.

It should be noted that the present embodiment described below does not unduly limit the contents of the present invention described in the claims and can be modified without departing from the gist of the present invention. Moreover, not all of the configurations described in the present embodiment are necessarily indispensable as means for solving the present invention. A process for manufacturing a positive electrode active material for a lithium ion secondary battery according to an embodiment of the present invention will be described in the following order.
1. Lithium-transition metal composite oxide manufacturing process
2. Process for manufacturing positive electrode active material for lithium ion secondary battery
2-1. Mixing process
2-2. Milling process
2-3. Heat treatment process
3. Positive electrode active material for lithium ion secondary battery
4. Lithium ion secondary battery

### <1. Lithium-transition metal composite oxide manufacturing process>

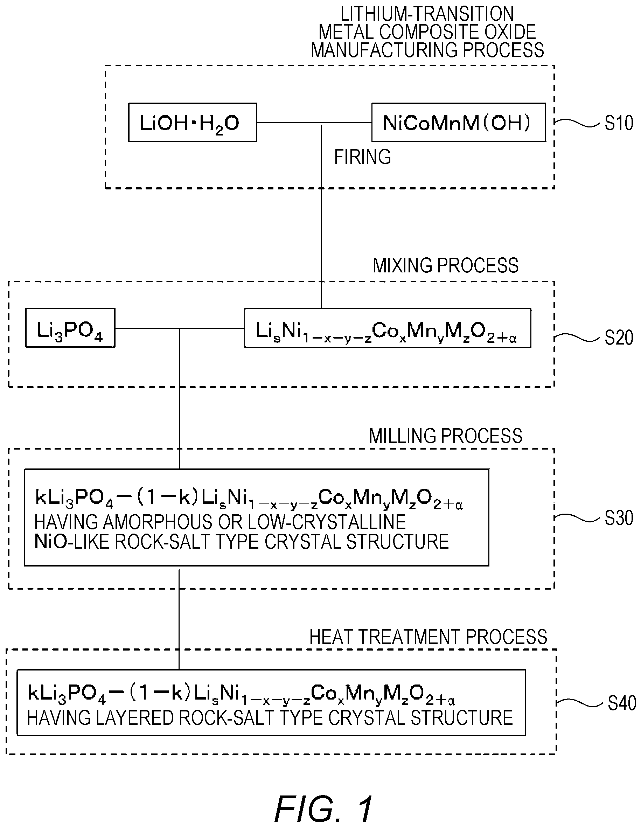

As shown in Fig. 1, a positive electrode active material for a lithium ion secondary battery according to an embodiment of the present invention is manufactured from a lithium-transition metal composite oxide obtained by mixing a metal composite hydroxide with a lithium salt and firing the mixture. The lithium-transition metal composite oxide manufacturing process S10 is further manufactured by the following processes. The processes will be described below.

### (Composite hydroxide particle manufacturing process)

The composite hydroxide particle manufacturing process is a process of adding an aqueous solution containing an alkaline solution to a mixed aqueous solution of a nickel salt such as nickel(II) sulfate, a cobalt salt such as cobalt(II) sulfate, a manganese salt such as manganese sulfate, and an additive metal salt to obtain composite hydroxide particles as a coprecipitate. As an additive element used in the additive metal salt, at least one element selected from the group consisting of V, Mg, Mo, Nb, Ti, W, and Al can be used. A concentration of cobalt, a concentration of manganese, and a concentration of the additive element with respect to a transition metal are appropriately determined depending on the composition of the lithium-transition metal composite oxide and the positive electrode active material described below. In addition, regarding the concentration of cobalt and the concentration of the additive element with respect to the transition metal, from the viewpoint of stabilization of a crystal structure and safety, the concentration of cobalt is preferably 10 at% or more and 35 at% or less, and the concentration of the additive element is preferably 0.1 at% or more and 10 at% or less. Incidentally, depending on the composition of the lithium-transition metal composite oxide and the positive electrode active material, the cobalt salt, the manganese salt, and the additive metal salt may not be added.

The mixed aqueous solution is made alkaline by adding an aqueous solution containing an alkaline solution. Regarding a pH region of the mixed aqueous solution, when no complexing agent is added, a pH of 10 to 11 is preferably selected, and a temperature of the mixed aqueous solution is preferably within a range of 60°C or more and 80°C or less. Within such a range, a reaction velocity can be set within an appropriate range. In addition, solubility of Ni becomes preferable, and formation of particles due to crystallization can be prevented. When crystallization is performed in a state where the pH exceeds 11, fine particles are formed, filterability is deteriorated, and spherical particles tend not to be obtained. When the pH is less than 10, a production velocity of a hydroxide is remarkably slowed, Ni remains in the filtrate, and a precipitation amount of Ni deviates from target composition, so that a composite hydroxide having a target ratio tends not to be obtained. In addition, when the temperature of the mixed aqueous solution is lower than 60°C, the reaction velocity tends to be insufficient. Furthermore, when the temperature of the mixed aqueous solution exceeds 80°C, an evaporation amount of water increases, so that a slurry concentration increases, solubility of Ni decreases, and crystals such as sodium sulfate are generated in the filtrate, and charge and discharge capacity of a positive electrode material tends to decrease, for example, an impurity concentration increases.

In addition to adding an aqueous solution containing an alkaline solution, it is preferable to further add a complexing agent such as ammonia to the mixed aqueous solution in the composite hydroxide particle manufacturing process. By adding a complexing agent such as ammonia, solubility of Ni can be increased. When a complexing agent is used, regarding a pH region of the mixed aqueous solution, a pH of 10 to 12.5 is preferably selected, and the temperature of the mixed aqueous solution is preferably within a range of 40°C or more and 60°C or less. In a reaction tank, a complexing agent concentration in the mixed aqueous solution is preferably kept at a constant value within a range of 3 g/L or more and 25 g/L or less. When an ammonia concentration is less than 3 g/L, since solubility of metal ions cannot be kept constant, plate-like composite hydroxide primary particles having an ordered shape and particle size are not formed, and gel-like nuclei are easily generated, so that a particle size distribution tends to be easily spread. On the other hand, at an ammonia concentration of more than 25 g/L, the solubility of metal ions becomes too large, metal ion content remaining in the mixed aqueous solution increases, and composition deviation or the like tends to occur. In addition, when the ammonia concentration fluctuates, the solubility of metal ions fluctuates, and uniform composite hydroxide particles are not formed. Therefore, it is preferable to maintain the ammonia concentration at a constant value. For example, the ammonia concentration is preferably maintained at a desired concentration with a difference between an upper limit and a lower limit of about 5 g/L.

### (Heating process)

The heating process is a process of heating the composite hydroxide particles manufactured in the composite hydroxide particle manufacturing process, and is performed as necessary. Water contained in the composite hydroxide particles can be removed by the heating process. By performing this heating process, water remaining in the particles until a firing process can be reduced. In addition, since the composite hydroxide particles can be converted into composite oxide particles, it is possible to prevent variations in a proportion of the number of atoms of metals and the number of atoms of lithium in a positive electrode active material to be manufactured. Incidentally, since it is sufficient that water can be removed to such an extent that there is no variation in the proportion of the number of atoms of metals and the number of atoms of lithium in the positive electrode active material, it is not always necessary to convert all the composite hydroxide particles into composite oxide particles. In the heating process, the composite hydroxide particles may be heated to a temperature at which remaining water is removed, and the heating temperature is not particularly limited, but is preferably 105°C or higher and 800°C or lower. When the composite hydroxide particles are heated to 105°C or higher, remaining water can be removed. Incidentally, when the temperature is lower than 105°C, it tends to take a long time to remove remaining water. When the temperature exceeds 800°C, particles converted into a composite oxide tend to sinter and aggregate. An atmosphere in which the heat treatment is performed is not particularly limited, and the heat treatment is preferably performed in an air flow in which the heat treatment can be easily performed.

### (Firing process)

The firing process is a process of firing a lithium mixture obtained by mixing the particles obtained by the heating process with lithium and/or a lithium compound to obtain a lithium-transition metal composite oxide having a crystal structure of a layered structure. In the lithium mixture, a ratio (Li/Me) of the number of atoms of metals other than lithium (that is, a sum (Me) of the number of atoms of nickel, cobalt, and additive metals) to the number of atoms of lithium (Li) in the lithium mixture is preferably more than 1.00 to less than 1.30, and the mixture is mixed as such. That is, Li/Me in the lithium mixture is mixed so as to be the same as Li/Me in the positive electrode active material of the present invention. This is because Li/Me does not change before and after the firing process, and thus Li/Me to be mixed is Li/Me in the positive electrode active material.

The lithium compound is not particularly limited, but for example, lithium hydroxide, lithium nitrate, or lithium carbonate, or a mixture thereof is preferable from the viewpoint of easy availability. In particular, in consideration of ease of handling and stability of quality, it is more preferable to use lithium hydroxide.

Incidentally, it is preferable that the lithium mixture is sufficiently mixed before firing. By sufficiently mixing before firing, there is no variation in Li/Me (additive metal) between individual particles, and sufficient battery characteristics can be obtained.

The firing process is a process of firing the above lithium mixture to obtain lithium-transition metal composite oxide particles. When the lithium mixture is fired in the firing process, lithium in a lithium-containing material is diffused into the particles obtained in the above heating process, so that a lithium-transition metal composite oxide having a crystal structure of a layered structure is formed. The firing of the lithium mixture is performed at 700°C or higher and 850°C or lower, and particularly preferably 720°C or higher and 820°C or lower. When the firing temperature is lower than 700°C, the diffusion of lithium into the above particles is not sufficiently performed, excessive lithium and unreacted particles remain, and crystallinity tends to be insufficient. In addition, when the firing temperature exceeds 850°C, intense sintering occurs between the above particles, and abnormal grain growth tends to occur. Then, there is a possibility that the particles after firing become coarse and a particle form (a form of spherical secondary particles described below) cannot be maintained, and when the positive electrode active material is formed, a specific surface area decreases, a resistance of the positive electrode increases, and a battery capacity tends to decrease. In addition, a firing time is preferably at least 3 hours or more, and more preferably 6 hours or more and 24 hours or less.

In addition, an atmosphere when firing is preferably an oxidizing atmosphere, and particularly preferably an atmosphere having an oxygen concentration of 18 vol% or more and 100 vol% or less. That is, the firing is preferably performed in the air or an oxygen flow. This is because when the oxygen concentration is less than 18 vol%, composite hydroxide particles contained in the particles cannot be sufficiently oxidized, and crystallinity of the lithium-transition metal composite oxide may be in an insufficient state. In particular, in consideration of battery characteristics, the firing is preferably performed in an oxygen flow.

The positive electrode active material for a lithium ion secondary battery according to an embodiment of the present invention is manufactured using the lithium-transition metal composite oxide obtained through the above firing process. The manufacturing process will be described below.

### <2. Process for manufacturing positive electrode active material for lithium ion secondary battery>

A process for manufacturing a positive electrode active material for a lithium ion secondary battery according to an embodiment of the present invention is a process for manufacturing a positive electrode active material for a lithium ion secondary battery including secondary particles in which a plurality of primary particles are aggregated with each other, and includes a mixing process S20, a milling process S30, and a heat treatment process S40. Hereinafter, every process will be described.

### <2-1. Mixing process>

In the mixing process S20, the lithium-transition metal composite oxide obtained through the above firing process is used. The lithium-transition metal composite oxide has a crystal structure of a layered structure. In addition, the lithium-transition metal composite oxide is represented by a general formula: LiₛNi_{1-x-y-z}CoₓMn_{y}M_{z}O_{2+α} (where 0 ≤ x ≤ 0.35, 0 ≤ y ≤ 0.35, 0 ≤ z ≤ 0.10, 1.00 ≤ s ≤ 1.30, 0 ≤ α ≤ 0.2, and M is at least one element selected from V, Mg, Mo, Nb, Ti, W, and Al). Incidentally, an amount of each additive element is adjusted so as to fall within the above range in the above lithium-transition metal composite oxide manufacturing process S10.

In addition, in the mixing process S20, the lithium-transition metal composite oxide and lithium phosphate are mixed. A mixing method is not particularly limited, and for example, mixing is performed in a mortar. In addition, examples of the lithium phosphate include Li₃PO₄.

In addition, in the mixing process S20, it is preferable to mix the lithium phosphate with the lithium-transition metal composite oxide so as to be more than 0 and 10 wt% or less. The content is more preferably more than 0 and 5 wt% or less.

### <2-2. Milling process>

In the milling process S30, the mixture obtained in the mixing process S20 is further mixed while applying a mechanical stress thereto. By mixing the mixture while applying a mechanical stress to the mixture, it is possible to form the lithium-transition metal composite oxide having a crystal structure of a layered structure and the lithium phosphate into an amorphous or low-crystalline NiO-like rock-salt type crystal structure.

A process for applying a mechanical stress to the mixture is not particularly limited, but it is preferable to apply a mechanical stress to the mixture by mechanical milling. In this way, it is further possible to form the lithium-transition metal composite oxide having a crystal structure of a layered structure and the lithium phosphate into an amorphous or low-crystalline NiO-like rock-salt type crystal structure.

A treatment apparatus for the mechanical milling is not particularly limited, but for example, a ball mill, a vibration mill, a turbo mill, mechanofusion, a disk mill, or a planetary ball mill can be suitably used. These ball mills are preferable because large mechanical energy can be obtained. In addition, the planetary ball mill is more preferable because a pot rotates and revolves by a disk, so that high impact energy can be efficiently generated.

Conditions for the mechanical milling are appropriately set so as to obtain a mixture having an amorphous or low-crystalline NiO-like rock-salt type crystal structure. For example, when a general planetary ball mill is used, the number of revolutions of the disk is preferably, for example, 100 rpm or more and 2000 rpm or less, and more preferably 300 rpm or more and 1000 rpm or less. In addition, a total treatment time of the planetary ball mill is, for example, 600 minutes or more, and may be 1000 minutes or more. However, if a continuous treatment time is long, a treated product may be heated to a high temperature, and side reactions other than intended side reactions may occur. Therefore, it is preferable to take a short cooling time between mixing treatments. As a material of a container and a milling ball used in the planetary ball mill, zirconia or alumina is preferably used. A diameter of the milling ball is preferably, for example, 1 mm or more and 20 mm or less. The mechanical milling is preferably performed in an inert gas atmosphere such as an argon atmosphere.

The amorphous state in the present application refers to a solid state in which an arrangement of constituent atoms does not have long-distance regularity like a crystal structure. In addition, the low-crystalline state refers to a state in which a crystal is present so as to be positioned between an amorphous state and a crystal state, the low-crystalline state is formed of single crystal grains "crystal grains" having different orientations, and regularity of a crystal structure is a relatively short distance (for example, less than 100 nm). The amorphous state can be seen from the absence of a clear peak in an X-ray diffraction result. In addition, the low-crystalline state can be seen from the fact that, in an X-ray diffraction result, for example, a peak of a rock-salt type crystal structure ofNiO is observed, but a diffraction line is not clear. In addition, in the present application, the NiO-like rock-salt type crystal structure refers to a structure in which the rock-salt type crystal structure of NiO is distorted.

In the milling process S30, it is possible to finely mill the lithium phosphate and the lithium-transition metal composite oxide in the mixture obtained in the mixing process S20, further mix the finely milled lithium phosphate and lithium-transition metal composite oxide, and mix the lithium-transition metal composite oxide and the lithium phosphate in an atomic order. This makes it possible to obtain a lithium-transition metal composite oxide having a layered rock-salt type crystal structure in which lithium phosphate is finely crystallized and dispersed in the heat treatment process.

### <2-3. Heat treatment process>

In the heat treatment process S40, the mixture having an amorphous or low-crystalline NiO-like rock-salt type crystal structure obtained in the milling process S30 is subjected to a heat treatment, whereby a lithium-transition metal composite oxide having a layered rock-salt type crystal structure in which lithium phosphate is finely crystallized and dispersed can be obtained. In the heat treatment process S40, only the lithium-transition metal composite oxide has a layered rock-salt type crystal structure, and the lithium phosphate does not have a layered structure.

In addition, according to the heat treatment process S40, it is possible that the finely crystallized lithium phosphate covers a surface of a primary particle of the lithium-transition metal composite oxide having a layered rock-salt type crystal structure, and is dispersed inside or on a surface of a secondary particle of the lithium-transition metal composite oxide having a layered rock-salt type crystal structure.

A positive electrode active material obtained through the heat treatment process S40 is represented by a general formula: kLi₃PO₄-(1-k)LiₛNi_{1-x-y-z}CoₓMn_{y}M_{z}O_{2+α} (where 0 < k < 0.1, 0 ≤ x ≤ 0.35, 0 ≤ y ≤ 0.35, 0 ≤ z ≤ 0.10, 1.00 ≤ s ≤ 1.30, 0 ≤ α ≤ 0.2, and M is at least one element selected from V, Mg, Mo, Nb, Ti, W, and Al).

In addition, in the heat treatment process S40, a heat treatment is preferably performed at a temperature of 600 to 700°C. In this way, it is further possible that the finely crystallized lithium phosphate covers a surface of a primary particle of the lithium-transition metal composite oxide having a layered rock-salt type crystal structure, and is dispersed inside or on a surface of a secondary particle of the lithium-transition metal composite oxide having a layered rock-salt type crystal structure, so that it is possible to achieve a high capacity and suppress a decrease in capacity when charging and discharging repeatedly. In addition, the heat treatment process S40 is preferably performed in an oxidizing atmosphere having an oxygen concentration of 80 vol% or more and 100 vol% or less, and more preferably performed in an oxygen atmosphere. A heat treatment time is preferably 5 hours or more and 24 hours or less, and more preferably 8 hours or more and 16 hours or less.

As described above, according to the process for manufacturing a positive electrode active material for a lithium ion secondary battery according to an embodiment of the present invention, by suppressing a structural change associated with charge and discharge, obtained is a positive electrode active material capable of achieving a high capacity and suppressing a decrease in capacity when charging and discharging repeatedly, which is a drawback of LNO.

### <3. Positive electrode active material for lithium ion secondary battery>

A positive electrode active material for a lithium ion secondary battery according to an embodiment of the present invention is a positive electrode active material for a lithium ion secondary battery including secondary particles in which a plurality of primary particles are aggregated with each other. In addition, the positive electrode active material for a lithium ion secondary battery contains a lithium-transition metal composite oxide having a layered rock-salt type crystal structure and finely crystallized lithium phosphate, and is represented by a general formula: kLi₃PO₄-(1-k)LiₛNi_{1-x-y-z}CoₓMn_{y}M_{z}O_{2+α} (where 0 < k < 0.1, 0 ≤ x ≤ 0.35, 0 ≤ y ≤ 0.35, 0 ≤ z ≤ 0.10, 1.00 ≤ s ≤ 1.30, 0 ≤ α ≤ 0.2, and M is at least one element selected from V, Mg, Mo, Nb, Ti, W, and Al).

In a ratio (molar ratio) of material amounts of the respective elements represented by the above general formula, k representing a content of Li₃PO₄ is more than 0 and less than 0.1, and may be 0.01 or more and 0.07 or less, or may be 0.03 or more and 0.05 or less. When k is 0, lithium phosphate cannot cover a surface of a primary particle of the lithium-transition metal composite oxide having a layered rock-salt type crystal structure. In addition, lithium phosphate cannot be dispersed inside or on a surface of a secondary particle of the lithium-transition metal composite oxide having a layered rock-salt type crystal structure. On the other hand, when k is 0.1 or more, a proportion of a lithium-transition metal composite oxide involved in charge and discharge decreases, charge and discharge capacity decreases, and a lithium phosphate layer on a surface becomes too thick, so that a surface resistance increases.

In the above molar ratio, s representing a content of Li is 1.00 or more and 1.30 or less, and may be 1.01 or more and 1.20 or less, or may be 1.05 or more and 1.10 or less. When a material amount ratio of lithium is less than 1.00, a site to be occupied by lithium in a crystal of a lithium-nickel composite oxide is occupied by other elements, and the charge and discharge capacity may decrease. On the other hand, when the material amount ratio exceeds 1.30, an excessive amount of lithium compounds that do not contribute to charge and discharge are present together with the lithium-nickel composite oxide, and a battery resistance may increase or the charge and discharge capacity may decrease.

In the above molar ratio, x representing a content of cobalt (Co) is 0 or more and 0.35 or less, and may be 0.05 or more and 0.35 or less, or may be 0.1 or more and 0.3 or less. When cobalt is contained within the above range, a high battery capacity is possessed and cycle characteristics are excellent.

In the above molar ratio, y representing a content of manganese (Mn) is 0 or more and 0.35 or less, and may be 0 or more and 0.10 or less. When manganese is contained within the above range, thermal stability is excellent.

In the above molar ratio, z representing a content of element M is, for example, 0 or more and 0.10 or less. M can be selected from a plurality of elements according to required characteristics. Incidentally, the positive electrode active material may contain a small amount of elements other than the above Ni, Co, Mn, and the element M as long as an effect of the present invention is not impaired.

Incidentally, in the above general formula, α is a coefficient that changes according to a valence of a metal element other than lithium contained in the lithium-metal composite oxide and a ratio of the number of atoms of lithium to a metal element other than lithium.

The lithium-transition metal composite oxide has a layered rock-salt type crystal structure. Further, the finely crystallized lithium phosphate covers a surface of a primary particle of the lithium-transition metal composite oxide having a layered rock-salt type crystal structure, and is dispersed inside or on a surface of a secondary particle of the lithium-transition metal composite oxide having a layered rock-salt type crystal structure.

A content of the lithium phosphate (Li₃PO₄) is preferably 10 mol% or less, more preferably 1 mol% or more and 7 mol% or less, and still more preferably 3 mol% or more and 5 mol% or less with respect to the lithium-transition metal composite oxide (LiNiCoMnMO).

As described above, according to the positive electrode active material for a lithium ion secondary battery according to an embodiment of the present invention, it is possible to achieve a high capacity and suppress a decrease in capacity when charging and discharging repeatedly, which is a drawback of LNO, by suppressing a structural change associated with charge and discharge.

### <4. Lithium ion secondary battery>

A lithium ion secondary battery according to an embodiment of the present invention includes a positive electrode containing the above positive electrode active material for a lithium ion secondary battery. In addition, the above lithium ion secondary battery can be constituted by the same components as those of a general lithium ion secondary battery, and includes, for example, a positive electrode, a negative electrode, and a non-aqueous electrolyte. It should be noted that the embodiments to be described below are merely examples and the lithium ion secondary battery of the present embodiment can be implemented in various modified and improved forms based on the knowledge of those skilled in the art based on the embodiments described in the present specification. Moreover, an application of the lithium ion secondary battery of the present embodiment is not particularly limited.

### (a) Positive electrode

Using the positive electrode active material for a lithium ion secondary battery described above, for example, a positive electrode of a lithium ion secondary battery is fabricated as follows. First, a powdery positive electrode active material, a conductive material, and a binding agent are mixed, and if necessary, activated carbon and a solvent intended for viscosity adjustment or the like are further added, and the resulting mixture is kneaded to fabricate a positive electrode mixture paste. As for a mixing ratio of respective components in the positive electrode mixture paste, for example, when a total mass of a solid content of a positive electrode mixture excluding the solvent is 100 mass parts, it is preferable that a content of the positive electrode active material is 60 to 95 mass parts, a content of the conductive material is 1 to 20 mass parts, and a content of the binding agent is 1 to 20 mass parts as in a positive electrode of a general lithium ion secondary battery.

The obtained positive electrode mixture paste is applied onto a surface of a current collector made of, for example, an aluminum foil, and dried to scatter the solvent. If necessary, pressure may be applied by roll pressing or the like in order to increase an electrode density. In this way, a sheet-like positive electrode can be fabricated. The sheet-like positive electrode can be cut into an appropriate size according to a target battery and used for fabricating a battery. However, the process for fabricating the positive electrode is not limited to the example, and another process may be used.

As the conductive material of the positive electrode, it is possible to use, for example, graphite (natural graphite, artificial graphite, expanded graphite, and the like), carbon black-based materials such as acetylene black and Ketjen Black (registered trademark), and the like.

The binding agent plays a role of binding active material particles together, and it is possible to use, for example, polyvinylidene fluoride (PVDF), polytetrafluoroethylene (PTFE), fluorine rubber, ethylene propylene diene rubber, styrene butadiene, a cellulose-based resin, polyacrylic acid, and the like.

Incidentally, if necessary, a solvent for dispersing the positive electrode active material, the conductive material, and the activated carbon and dissolving the binding agent is added to the positive electrode mixture. As the solvent, specifically, it is possible to use an organic solvent such as N-methyl-2-pyrrolidone. In addition, activated carbon can be added to the positive electrode mixture in order to increase an electric double layer capacity.

### (b) Negative electrode

As a negative electrode, used is metal lithium, a lithium alloy, or the like, or a negative electrode mixture obtained by mixing a binding agent with a negative electrode active material capable of inserting and de-inserting lithium ions, adding an appropriate solvent to the mixture to be paste-like, applying the mixture onto a surface of a metal foil current collector made of copper or the like, drying the mixture, and if necessary, compressing the mixture to increase an electrode density.

As the negative electrode active material, it is possible to use, for example, natural graphite, artificial graphite, organic compound fired bodies such as a phenol resin, and powders of carbon materials such as coke. In this case, a fluorine-containing resin such as PVDF can be used as a negative electrode binding agent similarly to the positive electrode and an organic solvent such as N-methyl-2-pyrrolidone can be used as a solvent for dispersing these active materials and the binding agent.

### (c) Separator

A separator is sandwiched between the positive electrode and the negative electrode. The separator separates the positive electrode and the negative electrode and holds an electrolyte, and it is possible to use, for example, a thin film of polyethylene, polypropylene, or the like, having a large number of fine pores.

### (d) Non-aqueous electrolyte

As a non-aqueous electrolyte, a non-aqueous electrolyte solution can be used. As the non-aqueous electrolyte solution, for example, a solution obtained by dissolving a lithium salt as a supporting salt in an organic solvent may be used. In addition, as the non-aqueous electrolyte solution, a solution obtained by dissolving a lithium salt in an ionic liquid may be used. Incidentally, the ionic liquid refers to a salt that is composed of cations and anions other than lithium ions and exhibits a liquid state even at normal temperature.

As the organic solvent, one kind selected from cyclic carbonates such as ethylene carbonate, propylene carbonate, butylene carbonate, and trifluoropropylene carbonate; chain carbonates such as diethyl carbonate, dimethyl carbonate, ethyl methyl carbonate, and dipropyl carbonate; further, ether compounds such as tetrahydrofuran, 2-methyltetrahydrofuran, and dimethoxyethane; sulfur compounds such as ethylmethyl sulfone and butane sultone; and phosphorus compounds such as triethyl phosphate and trioctyl phosphate may be used singly or two or more kinds thereof can be used in mixture.

As the supporting salt, LiPF₆, LiBF₄, LiClO₄, LiAsF₆, LiN(CF₃SO₂)₂, and any composite salt thereof can be used. Furthermore, the non-aqueous electrolyte solution may contain a radical scavenger, a surfactant, a flame retardant, and the like.

In addition, as the non-aqueous electrolyte, a solid electrolyte may be used. The solid electrolyte has a property of withstanding a high voltage. Examples of the solid electrolyte include an inorganic solid electrolyte and an organic solid electrolyte.

As the inorganic solid electrolyte, an oxide-based solid electrolyte, a sulfide-based solid electrolyte, or the like is used.

The oxide-based solid electrolyte is not particularly limited, and any oxide-based solid electrolyte containing oxygen (O) and having lithium ion conductivity and electron insulating properties can be used. Examples of the oxide-based solid electrolyte include lithium phosphate (Li₃PO₄), Li₃PO₄N_{X}, LiBO₂N_{X}, LiNbO₃, LiTaO₃, Li₂SiO₃, Li₄SiO₄-Li₃PO₄, Li₄SiO₄-Li₃VO₄, Li₂O-B₂O₃-P₂O₅, Li₂O-SiO₂, Li₂O-B₂O₃-ZnO, Li_{1+X}Al_{X}Ti_{2-X}(PO₄)₃(0 ≤ X ≤ 1), Li_{1+X}Al_{X}Ge_{2-X}(PO₄)₃(0 ≤ X ≤ 1), LiTi₂(PO₄)₃, Li_{3X}La_{2/3-X}TiO₃ (0 ≤ X ≤2/3), Li₅La₃Ta₂O₁₂, Li₇La₃Zr₂O₁₂, Li₆BaLa₂Ta₂O₁₂, and Li_{3.6}Si_{0.6}P_{0.4}O₄.

The sulfide-based solid electrolyte is not particularly limited, and any sulfide-based solid electrolyte containing sulfur (S) and having lithium ion conductivity and electron insulating properties can be used. Examples of the sulfide-based solid electrolyte include Li₂S-P₂S₅, Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, and LiI-Li₃PO₄-P₂S₅.

Incidentally, as the inorganic solid electrolyte, those other than the above may be used, and for example, Li₃N, LiI, Li₃N-LiI-LiOH, or the like may be used.

The organic solid electrolyte is not particularly limited as long as it is a polymer compound exhibiting ion conductivity, and for example, polyethylene oxide, polypropylene oxide, copolymers thereof, and the like can be used. In addition, the organic solid electrolyte may contain a supporting salt (lithium salt).

### (e) Shape and configuration of battery

The lithium ion secondary battery according to an embodiment of the present invention includes, for example, a positive electrode, a negative electrode, a separator, and a non-aqueous electrolyte as described above. In addition, a shape of the lithium ion secondary battery is not particularly limited, and various shapes such as a cylindrical shape and a laminated shape can be used. In any shape, a positive electrode and a negative electrode are laminated with a separator interposed therebetween to form an electrode body, the obtained electrode body is impregnated with a non-aqueous electrolyte solution, a positive electrode collector and a positive electrode terminal connected to the outside and a negative electrode collector and a negative electrode terminal connected to the outside are connected using a current collecting lead or the like, and the electrode body is sealed into a battery case to complete a lithium ion secondary battery.

The lithium ion secondary battery according to an embodiment of the present invention includes a positive electrode composed of the positive electrode active material described above, and thus, it is possible to achieve a high capacity and suppress a decrease in capacity when charging and discharging repeatedly, which is a drawback of LNO, by suppressing a structural change associated with charge and discharge.

### Examples

Hereinafter, the present invention will be described in more detail with reference to Examples and Comparative Examples, but the present invention is not limited by these Examples at all.

### (Example 1)

In Example 1, in a glove box in an argon atmosphere, 0.97 g of lithium nickelate and 0.03 g of lithium phosphate were weighed with an electronic balance, sufficiently mixed with an agate mortar (mixing process), and then enclosed in a zirconia container having a volume of 40 ml together with 59 g of ϕ 5 mm zirconia balls.

Then, using a planetary ball mill (P-7) manufactured by Fritsch GmbH, mechanical milling treatment was performed 80 times in total in which the treatment was performed at 600 rpm × 15 min and then stopped for 3 min (milling process).

Thereafter, in a glove box in an argon atmosphere, the zirconia container was opened, the zirconia balls were removed, and the mixture obtained by the mechanical milling treatment was taken out. A crystal structure of the obtained mixture was confirmed by an XRD apparatus (manufactured by Bruker, trade name: D2 PHASER), and confirmed to be amorphous.

Further, the mixture obtained by the mechanical milling treatment was heat-treated at 650°C for 12 hours in a firing furnace in an oxygen atmosphere (heat treatment process) to obtain a positive electrode active material according to the present invention.

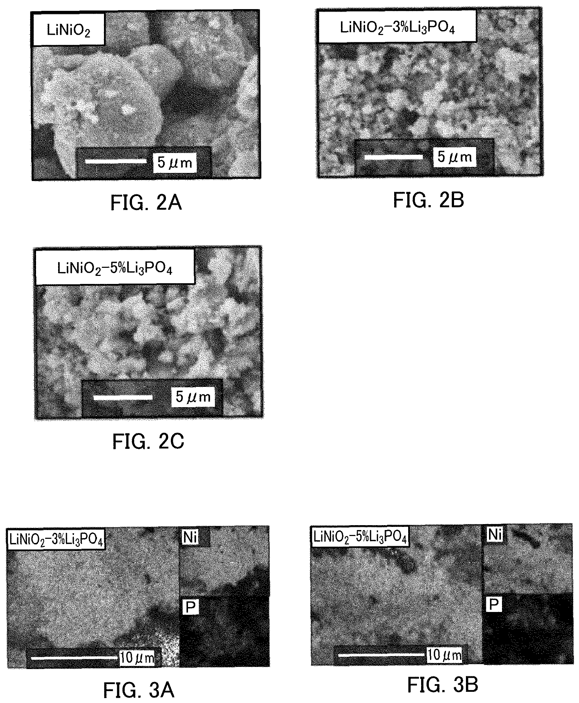

The obtained positive electrode active material was observed using SEM-EDS (manufactured by JEOL Ltd., trade name: JCM-6000), and an element mapping image was acquired. Fig. 2 shows SEM observation results, and Fig. 3 shows EDX element mapping results.

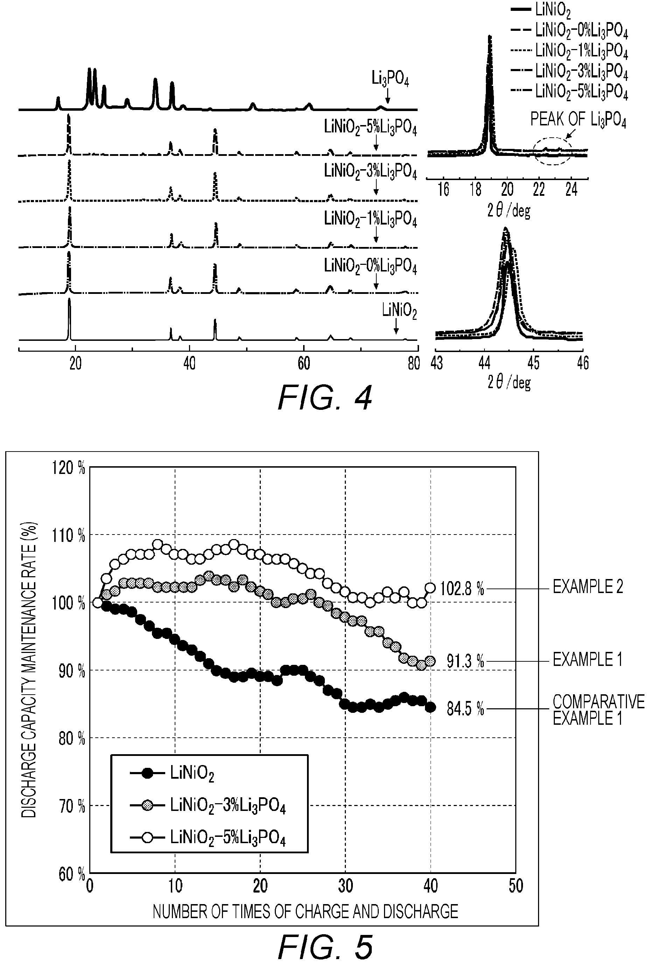

Furthermore, in order to confirm the crystal structure of the obtained positive electrode active material, an XRD profile was obtained using an XRD apparatus (manufactured by Bruker, trade name: D2 PHASER). The results are shown in Fig. 4.

In a glove box in an argon atmosphere, 0.170 g of the obtained positive electrode active material was weighed, put in an ointment container together with 0.010 g of acetylene black, 0.250 g of a PVDF solution (8% solution manufactured by KUREHA CORPORATION), and 70 µl of NMP, and mixed with a stirrer (AR-100 manufactured by THINKY CORPORATION).

The obtained slurry was applied to an aluminum foil, vacuum-dried at normal temperature for 2 hours, and then vacuum-dried at 120°C for 2 hours to obtain an electrode.

The obtained electrode was punched out to have a diameter of 10 mm, a weight of the electrode was measured, and a coin cell was assembled using the electrode as a positive electrode, metal Li as a negative electrode, a porous film made of PE as a separator, and 1 M LiPF6/EC (3) + DMC (7) as an electrolyte solution. Thereafter, a current of 30 mA/g was applied to the obtained coin cell, charge and discharge were performed within a range of 2.5 V to 4.5 V, and a charge and discharge profile was confirmed. The results are shown in Fig. 5.

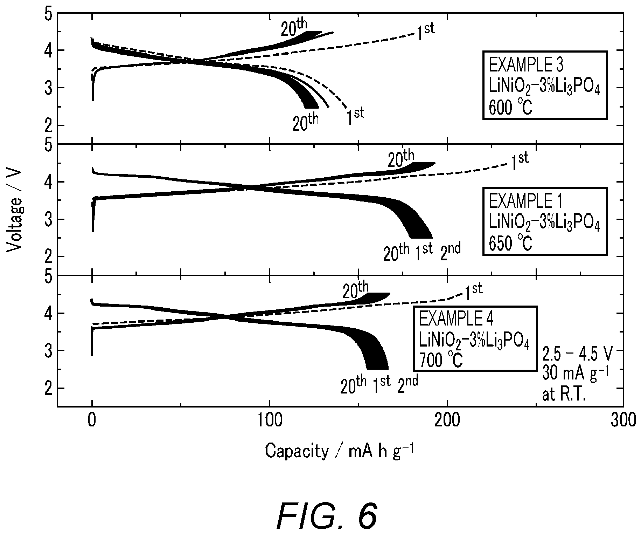

In addition, a charge and discharge profile of the positive electrode active material manufactured at a heat treatment temperature of 650°C in the heat treatment process is shown in Fig. 6. Incidentally, charge and discharge were performed 20 times.

### (Example 2)

In Example 2, 0.95 g of lithium nickelate and 0.05 g of lithium phosphate were used. In the same manner as in Example 1 except for the above, a positive electrode active material was synthesized, a coin cell was assembled, and charge and discharge were performed.

### (Example 3)

In Example 3, the heat treatment temperature in the heat treatment process was 600°C. In the same manner as in Example 1 except for the above, a positive electrode active material was synthesized, a coin cell was assembled, and charge and discharge were performed. A charge and discharge profile at the heat treatment temperature of 600°C in the heat treatment process is shown in Fig. 6.

### (Example 4)

In Example 4, the heat treatment temperature in the heat treatment process was 700°C. In the same manner as in Example 1 except for the above, a positive electrode active material was synthesized, a coin cell was assembled, and charge and discharge were performed. A charge and discharge profile at the heat treatment temperature of 700°C in the heat treatment process is shown in Fig. 6.

### (Comparative Example 1)

In Comparative Example 1, lithium phosphate was not mixed in the mixing process, and the milling process was also not performed. In the same manner as in Example 1 except for the above, a positive electrode active material was synthesized, a coin cell was assembled, and charge and discharge were performed.

### (Evaluation)

For the positive electrode active materials in Example 1, Example 2, and Comparative Example 1, samples were observed using SEM. SEM images are shown in Fig. 2. As shown in Fig. 2, the positive electrode active materials in Example 1 (Fig. 2(B)) and Example 2 (Fig. 2(C)) are lithium-transition metal composite oxides having a layered rock-salt type crystal structure formed into nanoparticles by a mechanical stress such as mechanical milling, and thus a particle size of the positive electrode active material as small as 1 µm to 5 µm was maintained even after the heat treatment process. On the other hand, in the positive electrode active material in Comparative Example 1 (Fig. 2(A)) in which lithium phosphate was not mixed in the mixing process and the milling process was also not performed, the particle size was larger than 8 µm.

In addition, element distributions of the positive electrode active materials in Example 1 and Example 2 were confirmed. The element distributions are shown in Figs. 3(A) and 3(B). As shown in Fig. 3, in the positive electrode active materials of Example 1 (Fig. 3(A)) and Example 2 (Fig. 3(B)), it was confirmed from the obtained mapping images that phosphorus was dispersed in a submicron order.

Furthermore, in order to confirm crystal structures of the positive electrode active materials in Example 1, Example 2, and Comparative Example 1, the crystal structures were confirmed using an XRD apparatus. The results of XRD are shown in Fig. 4. As shown in Fig. 4, in the positive electrode active materials in Example 1 and Example 2, it was confirmed from the obtained profiles that a main phase had a layered rock-salt type crystal structure. In addition, as shown in Fig. 4, in the positive electrode active materials in Examples 1 and 2, a diffraction peak of lithium phosphate was also slightly detected, so that it was also confirmed that crystalline lithium phosphate was dispersed in a submicron order.

Then, a discharge capacity maintenance rate with respect to the number of times of charge and discharge was confirmed. The results are shown in Fig. 5. As shown in Fig. 5, in the positive electrode active materials in Example 1 (LiNiO₂-3%Li₃PO₄) and Example 2 (LiNiO₂-5%Li₃PO₄), a decrease in discharge capacity was small when the cycle was repeated, and cycle characteristics were excellent. On the other hand, in the positive electrode active material in Comparative Example 1, a decrease in discharge capacity was large when the cycle was repeated, and cycle characteristics were inferior to those of Examples. Incidentally, in Examples and Figs. 2 to 6, "LiNiO₂-3%Li₃PO₄" indicates that a ratio of a weight of lithium phosphate to a weight of the whole lithium phosphate and lithium-transition metal composite oxide is 3 wt%, and "LiNiO₂-5%Li₃PO₄" indicates that a ratio of a weight of lithium phosphate to a weight of the whole lithium phosphate and lithium-transition metal composite oxide is 5 wt%.

In addition, a charge and discharge profile of the positive electrode active material manufactured at a heat treatment temperature of 600°C to 700°C in the heat treatment process was confirmed. The results are shown in Fig. 6. In Fig. 6, a plot rising from the lower left to the upper right is a capacity and a voltage when charging, and a plot rising from the lower right to the upper left is a capacity and a voltage when discharging. As shown in Fig. 6, even when charge and discharge were repeated, a decrease in discharge capacity was small, and cycle characteristics were excellent. In addition, the positive electrode active material treated at 650°C in Example 1 was the most excellent in cycle characteristics.

As described above, according to the present invention, it was possible to achieve a high capacity and suppress a decrease in capacity when charging and discharging repeatedly, which is a drawback of LNO, by suppressing a structural change associated with charge and discharge.

Incidentally, each embodiment and each Example of the present invention have been described in detail as described above, but it will be readily apparent to those skilled in the art that many modifications can be made without departing substantially from the novelty and effects of the present invention. Hence, such modified examples are all included in the scope of the present invention.

For example, in the specification or the drawings, a term described at least once together with a broader or synonymous different term can be replaced with the different term anywhere in the specification or the drawings. In addition, the configurations and operations of the process for manufacturing a positive electrode active material for a lithium ion secondary battery, the positive electrode active material for a lithium ion secondary battery, and the lithium ion secondary battery are not limited to those described in each embodiment and each Example of the present invention, and various modifications can be made.

### Glossary of Drawing References

S 10 lithium-transition metal composite oxide manufacturing process
S20 mixing process
S30 milling process
S40 heat treatment process

## Claims

1. A process for manufacturing a positive electrode active material for a lithium ion secondary battery including secondary particles in which a plurality of primary particles are aggregated with each other, the process comprising:
a mixing process of mixing a lithium-transition metal composite oxide having a crystal structure of a layered structure with lithium phosphate;
a milling process of applying a mechanical stress to a mixture obtained in the mixing process to form the lithium-transition metal composite oxide having the crystal structure of the layered structure and the lithium phosphate into an amorphous or low-crystalline NiO-like rock-salt type crystal structure; and
a heat treatment process of subjecting the mixture having the amorphous or low-crystalline NiO-like rock-salt type crystal structure obtained in the milling process to a heat treatment to obtain a lithium-transition metal composite oxide having a layered rock-salt type crystal structure in which lithium phosphate is finely crystallized and dispersed,
wherein the lithium-transition metal composite oxide is represented by a general formula: LiₛNi_{1-x-y-z}CoₓMn_{y}M_{z}O_{2+α} (where 0 ≤ x ≤ 0.35, 0 ≤ y ≤ 0.35, 0 ≤ z ≤ 0.10, 1.00 ≤ s ≤ 1.30, 0 ≤ α ≤ 0.2, and M is at least one element selected from V, Mg, Mo, Nb, Ti, W, and Al), and
the finely crystallized lithium phosphate covers a surface of a primary particle of the lithium-transition metal composite oxide having the layered rock-salt type crystal structure, and is dispersed inside or on a surface of a secondary particle of the lithium-transition metal composite oxide having the layered rock-salt type crystal structure.

2. The process for manufacturing a positive electrode active material for a lithium ion secondary battery according to claim 1, wherein in the mixing process, the lithium phosphate is mixed with the lithium-transition metal composite oxide so as to be more than 0 and 10 wt% or less.

3. The process for manufacturing a positive electrode active material for a lithium ion secondary battery according to claim 1 or 2, wherein in the heat treatment process, a heat treatment is performed at a temperature of 600 to 700°C.

4. The process for manufacturing a positive electrode active material for a lithium ion secondary battery according to any one of claims 1 to 3, wherein in the milling process, a mechanical stress is applied by mechanical milling.

5. A positive electrode active material for a lithium ion secondary battery including secondary particles in which a plurality of primary particles are aggregated with each other, the positive electrode active material for a lithium ion secondary battery comprising:
a lithium-transition metal composite oxide having a layered rock-salt type crystal structure; and finely crystallized lithium phosphate, the positive electrode active material for a lithium ion secondary battery being represented by a general formula: kLi₃PO₄-(1-k)LiₛNi_{1-x-y-z}CoₓMn_{y}M_{z}O_{2+α} (where 0 < k < 0.1, 0 ≤ x ≤ 0.35, 0 ≤ y ≤ 0.35, 0 ≤ z ≤ 0.10, 1.00 ≤ s ≤ 1.30, 0 ≤ α ≤ 0.2, and M is at least one element selected from V, Mg, Mo, Nb, Ti, W, and Al),
wherein the finely crystallized lithium phosphate covers a surface of a primary particle of the lithium-transition metal composite oxide having the layered rock-salt type crystal structure, and is dispersed inside or on a surface of a secondary particle of the lithium-transition metal composite oxide having the layered rock-salt type crystal structure.

6. A lithium ion secondary battery comprising at least a positive electrode containing the positive electrode active material for a lithium ion secondary battery according to claim 5.
